# EUROPÄISCHE PATENTSCHRIFT

(11) **EP 3 262 912 B1**
(45) Veröffentlichungstag und Bekanntmachung des Hinweises auf die Patenterteilung: **24.07.2019**
(21) Anmeldenummer: 17401066.0
(22) Anmeldetag: 27.06.2017
(51) Int. Cl.: A01C 7/12

(54) **LANDWIRTSCHAFTLICHE VERTEILMASCHINE MIT ABDECKUNG**
AGRICULTURAL SPREADER MACHINE WITH COVER
ÉPANDEUR AGRICOLE DOTÉ DE REVÊTEMENT

(30) Priorität: 01.07.2016 DE 102016112058
(43) Veröffentlichungstag der Anmeldung: 03.01.2018
(73) Patentinhaber: Amazonen-Werke H. Dreyer GmbH & Co. KG, 49205 Hasbergen (DE)
(72) Erfinder: Stier, Roy, 26121 Oldenburg (DE); Brüggemann, Klaus, 27777 Ganderkesee (DE); Schröder, Olaf, 27798 Hude (DE)

(56) Entgegenhaltungen:
- DE-A1- 4 332 159
- US-A- 5 915 312
- US-A1- 2010 307 394
- US-A1- 2015 271 988

## Beschreibung

Die Erfindung betrifft eine landwirtschaftliche Verteilmaschine gemäß des Oberbegriffes des Patentanspruches 1.

Eine derartige Verteilmaschine ist in der DE 43 32 159 A1 beschrieben. Die beschriebene Verteilmaschine weist einen Vorratsbehälter auf, welchem zumindest ein Dosierorgan zugeordnet ist. Das zumindest eine Dosierorgan speist während des Verteilvorgangs das zu verteilende Material in einstellbaren Mengen über einstellbare Leitorgane in zu Ausbringorganen führende Förderleitungen ein. Dabei sind die Leitorgane in einer Betriebsposition geeignet positioniert, um als Abdeckung des Dosierorgans zu dienen. Dies verhindert, dass angetriebene Teile des Dosierorgans frei zugänglich sind. Zur Kalibrierung des Dosierorgans wird ein Abdrehvorgang durchgeführt. Für den Abdrehvorgang werden die Leitorgane in eine geeignete Abdrehposition bzw. Wartungsposition verbracht, um das dosierte Material an den Förderleitungen vorbei in einen Abdrehbehälter zu leiten.

Nachteilig bei einer derartigen Anordnung ist die aufwändige Kinematik, mit der die Leitorgane zwischen ihrer Betriebsposition und der Wartungsposition verbracht werden. Zusätzlich ist nachteilig, dass das zumindest eine Dosierorgan samt seiner Einstellelemente durch die sich in ihrer Betriebsposition befindlichen Leitorgane verdeckt werden. Dadurch ist während des Verteilvorgangs keine zeiteffiziente Korrektur der Dosiereinstellungen möglich. Stets müssen für eine Korrektur der Einstellungen die Leitorgane umständlich in ihre Wartungsposition verbracht werden, damit der Zugang zu den Einstellelementen des Dosierorgans frei ist.

Etwas Ähnliches zeigen die US 5 915 312 A sowie die US 2015/271988 A1: zur Wartung oder Einstellung der Dosierorgane ist in unkomfortabler Weise eine verschraubte Abdeckung zu entfernen.

Die US 2010/0307394 A1 zeigt eine Dosiereinrichtung, deren Dosierorgane mittels Abdeckungen abgedeckt sind. Aus den Abdeckungen ragen Antriebselemente heraus, die elektronisch angesteuert.

Der Erfindung liegt daher die Aufgabe zugrunde, eine Anordnung bereitzustellen, bei der bei mittels einer Abdeckung abgedecktem Dosierorgan Einstellungen vorgenommen werden können.

Erfindungsgemäß wird diese Aufgabe durch den kennzeichnenden Teil des Anspruchs 1 gelöst.

Aus dem Stand der Technik sind Verteilmaschinen bekannt, bei denen während des Verteilvorgangs die angetriebenen Teile der Dosierorgane mittels einer geeigneten Anordnung der Abdrehbehälter abgedeckt werden. Erfindungsgemäß ist eine derartige Anordnung nicht vorgesehen. Die Abdrehbehälter der erfindungsgemäßen Verteilmaschine sind daher ausschließlich für die ihnen während des Abdrehvorgangs zugedachte Nutzung vorgesehen und werden an einer optimalen Stelle der Maschine außerhalb des Abdrehvorgangs während des Verteilvorgangs angeordnet. Bei der erfindungsgemäßen Abdeckung handelt es sich um separate Bauteile zusätzlich zu dem Abdrehbehälter.

Da sich ein Bediener bei Arbeiten an den Dosierorganen beispielsweise mit seinen Händen in den angetriebenen Teilen der Dosierorgane verfangen kann, stellen diese eine signifikante Gefahrenquelle dar. Aus der erfindungsgemäßen Ausgestaltung der Abdeckung ergibt sich der Vorteil, dass die angetriebenen Teile zu jedem Zeitpunkt der Einstellarbeiten an den Dosierorganen abgedeckt sind und eine Einstellung mittels der freiliegenden Einstellelemente ungehindert möglich ist. Somit steigt die Arbeitssicherheit für einen Bediener deutlich.

Gleichzeitig bietet eine stetige Abdeckung der angetriebenen Teile der Dosierorgane einen verbesserten Schutz dieser Teile vor Verunreinigungen. Gelangt Schmutz in angetriebene und/oder bewegliche Teile einer Maschine, kann deren Funktion beeinträchtig und/oder deren Verschleiß begünstigt werden.

Ein besonderer Vorteil ergibt sich dadurch, dass die Abdeckung verschwenkbar als Abdeckklappe ausgeführt ist und in eine die angetriebenen Teile des zumindest einen Dosierorgans abdeckende Betriebsposition und in eine die angetriebenen Teile des zumindest einen Dosierorgans freigebende Wartungsposition verbringbar ist. Durch diese Ausgestaltung hat ein Bediener zusätzlich die Möglichkeit, bei Bedarf die Wartung der angetriebenen Teile der Dosierorgane vorzunehmen. Angetriebene bzw. bewegliche Teile sind beispielsweise Dosierräder und/oder -walzen, die Vorgelegewelle samt Zahnrädern und etwaig auf den Zahnrädern laufende Kettenzüge. Wartungsarbeiten können aufgrund von Verschleiß oder Verschmutzung anfallen. Ferner ist es für einen vielseitigen Einsatz der Verteilmaschine üblich, dass Teile der Dosierorgane vor einem Verteilvorgang ausgetauscht werden, beispielsweise zur Anpassung der Dosierorgane auf die spezifischen Korngrößen verschiedener auszubringender Materialien.

Sind derartige Arbeiten notwendig, erweist sich als vorteilhaft, dass die Abdeckung ausschließlich unter bewusster Nutzung eines geeigneten Werkzeugs von ihrer Betriebsposition in ihre Wartungsposition verbringbar ist. Dadurch wird für einen Bediener die maximal mögliche Arbeitssicherheit sichergestellt. Es ist ausgeschlossen, dass durch Unachtsamkeit oder mangelnde Sachkenntnis Zugang zu den angetriebenen Teilen der Dosierorgane erlangt wird.

Eine weitere vorteilhafte Ausgestaltung ist dadurch gegeben, dass die verschwenkbare Abdeckung im Bereich des zumindest einen Dosierorgans am Vorratsbehälter oder am Dosierorgan mittels Gelenkelementen angelenkt ist. Dadurch ist für einen Bediener die Abdeckung komfortabel zu öffnen und muss nicht aufwändig vollständig ab- bzw. angebaut werden. Zusätzlich kann die Abdeckung leicht zwischen Betriebsposition und Wartungsposition verbracht werden.

In vorteilhafter Weise kann eine besonders kompakte Bauform erreicht werden, wenn die Schwenkachse der Abdeckklappe zumindest annähernd der Rotationsachse der Vorgelegewelle des Antriebs des zumindest einen Dosierorgans entspricht.

Für Wartungsarbeiten an den angetriebenen Teilen des Dosierorgans ist es von Vorteil, dass die Abdeckung in ihrer die angetriebenen Teile des zumindest einen Dosierorgans freigebenden Wartungsposition einen ebenen, zumindest annähernd parallel zum Erdboden verlaufenden Bereich aufweist.

Ein besonderer Vorteil wird dadurch erreicht, dass der ebene, in Wartungsposition zumindest annähernd parallel zum Erdboden verlaufende Bereich der Abdeckung als Ablagefläche nutzbar ist. Durch diese Ausgestaltung ist es einem Bediener während der Durchführung von Wartungsarbeiten möglich, Werkzeuge und/oder austauschbare Bauteile für den Arbeitsprozess ab und/oder bereit zu legen. Dies erhöht den Komfort während derartiger Arbeiten erheblich. Unnötige Wege werden eingespart und die Gefahr, dass Bauteile und/oder Werkzeug zu Boden fallen, verloren gehen oder für den arbeitenden Bediener unerreichbar sind, sinkt.

Weitere Einzelheiten der Erfindung sind der Beispielsbeschreibung und den Zeichnungen zu entnehmen. Die Zeichnungen zeigen
- Fig.1: wesentliche Teile einer landwirtschaftlichen Verteilmaschine in perspektivischer Ansicht von schräg hinten,
- Fig.2: einen Vorratsbehälter der Verteilmaschine mit Abdeckung in Betriebsposition in perspektivischer Ansicht von schräg hinten,
- Fig.3: einen Vorratsbehälter der Verteilmaschine mit Abdeckung in Wartungsposition in perspektivischer Ansicht von schräg hinten,
- Fig.4: Abdeckung in Betriebsposition in perspektivischer Ansicht von schräg hinten und
- Fig.5: Abdeckung in Wartungsposition in perspektivischer Ansicht von schräg hinten.

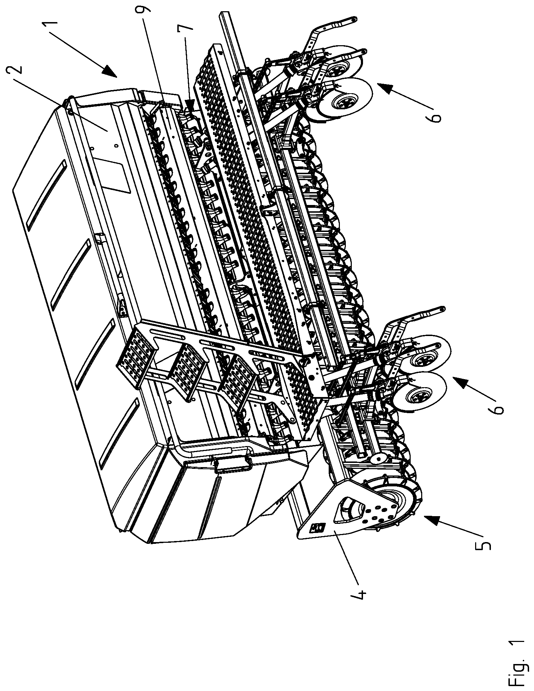

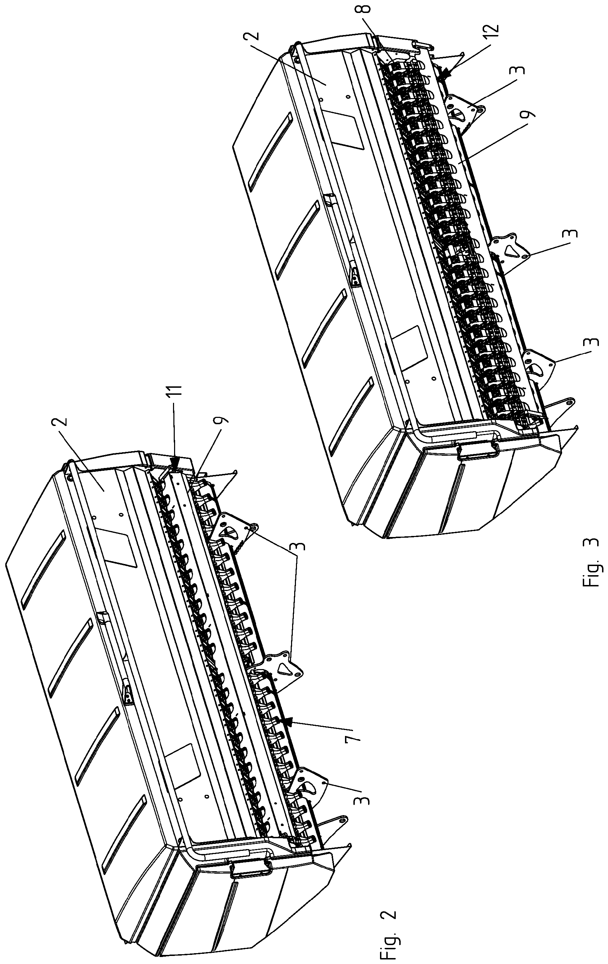

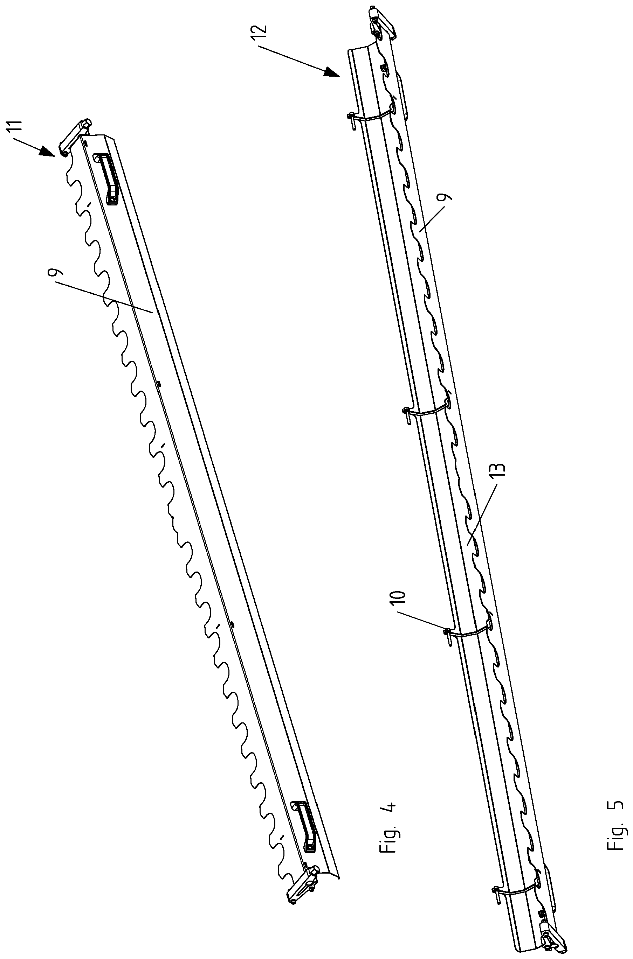

Eine landwirtschaftliche Verteilmaschine 1, welche im gewählten Beispiel der Fig. 1 bis 5 als Sämaschine ausgebildet ist, weist einen Vorratsbehälter 2 zur Bevorratung von zu verteilendem Material auf. Der Vorratsbehälter 2 stützt sich mittels Stützelementen 3 auf dem Rahmen 4 einer der Verteilmaschine 1 zugeordneten Walzeneinheit 5 ab, wie Fig. 1 zeigt. Der untere Bereich des Vorratsbehälters 2 ist als Auslaufbereich ausgestaltet, in welchem nicht dargestellte Auslauföffnungen angeordnet sind. Über die Auslauföffnungen wird das zu verteilende Material an zu Ausbringorganen 6 führende Förderleitungen 7 abgegeben. Im Bereich der Auslauföffnung sind mehrere Dosierorgane 8 angeordnet. Mittels der Dosierorgane 8 wird die an die Förderleitungen 7 abgegebene Menge des zu verteilenden Materials eingestellt. Unterhalb der Dosierorgane 8 sind Abdrehbehälter 7A zur Durchführung eines Abdrehvorgangs angeordnet.

Im Bereich der Dosierorgane 8 ist eine als Abdeckklappe ausgeführte Abdeckung 9 angeordnet. Mittels beispielsweise bolzen- oder schraubenartigen Befestigungselementen 10 ist die Abdeckung 9 am Vorratsbehälter 2 oder an den Dosierorganen 8 verschwenkbar angelenkt. Dabei bilden die Befestigungselemente 10 im Zusammenwirken mit ihren behälterseitigen Gegenstücken zum Verschwenken der Abdeckung 9 geeignete Gelenkelemente. Die Schwenkachse verläuft horizontal und fällt im Wesentlichen mit der Längsachse der Vorgelegewelle der Dosierorgane 8 zusammen. Durch das Verschwenken ist die Abdeckung 9 zwischen einer Betriebsposition 11 und einer Wartungsposition 12 verbringbar.

In der Betriebsposition 11 verdeckt die Abdeckung 9 die angetriebenen Teile der Dosierorgane 8. Angetriebene Teile der Dosierorgane 8 sind beispielsweise Dosierräder und/oder -walzen, die Vorgelegewelle samt Zahnrädern und etwaig auf den Zahnrädern laufende Kettenzüge. Die Einstellelemente der Dosierorgane 8 sind für den Bediener der Verteilmaschine 1 weiterhin zugänglich.

In der Wartungsposition 12 der Abdeckung 9 sind auch die angetriebenen Teile der Dosierorgane 8 zugänglich. Da angetriebene Maschinenteile für den Bediener grundsätzlich ein Verletzungsrisiko und damit eine Gefahrenquelle darstellen, ist die Abdeckung 9 ausschließlich unter bewusster Benutzung eines geeigneten Werkzeugs durch den Bediener von der Betriebsposition 11 in die Wartungsposition 12 verbringbar.

Befindet sich die Abdeckung 9 in ihrer Wartungsposition 12, weist sie einen waagerecht über dem Erdboden orientierten Ablagebereich 13 auf. Der Ablagebereich 13 ist während Wartungsarbeiten des Bedieners im Bereich der Dosierorgane 8 für eine Zwischenlagerung von beispielsweise austauschbaren Bauteilen und/oder Werkzeug geeignet.

Die Abdeckung 9 ist nicht zur Nutzung für den Abdrehvorgang vorgesehen. Zur Durchführung des Abdrehvorgangs sind Abdrehbehälter als separate Behältnisse ausgeführt.

## Patentansprüche

1. Landwirtschaftliche Verteilmaschine (1) mit einem Vorratsbehälter (2), zumindest einem dem Vorratsbehälter (2) zugeordneten rotierend angetriebenen Dosierorgan (8), welches das sich im Vorratsbehälter (2) befindliche Material in einstellbaren Mengen in zu Ausbringorganen (6) führende Förderleitungen (7) einspeist, wobei die angetriebenen, insbesondere rotierenden Teile eines Antriebs des Dosierorgans (8) mittels einer Abdeckung (9) während des Betriebes abdeckbar sind, wobei bei mittels der Abdeckung (9) abgedecktem Dosierorgan (8) Einstellelemente des zumindest einen Dosierorgans (8) zugänglich sind, **gekennzeichnet, dass** die Abdeckung (9) verschwenkbar als Abdeckklappe ausgeführt ist und in eine die angetriebenen Teile des zumindest einen Dosierorgans (8) abdeckende Betriebsposition (11) und in eine die angetriebenen Teile des zumindest einen Dosierorgans freigebende Wartungsposition (12) verbringbar ist.

2. Verteilmaschine (1) nach Anspruch 1, **dadurch gekennzeichnet, dass** die Abdeckung (9) ausschließlich unter bewusster Nutzung eines geeigneten Werkzeugs von ihrer Betriebsposition (11) in ihre Wartungsposition (12) verbringbar ist.

3. Verteilmaschine (1) nach zumindest einem der vorangegangenen Ansprüche, **dadurch gekennzeichnet, dass** die verschwenkbare Abdeckung (9) im Bereich des zumindest einen Dosierorgans (8) am Vorratsbehälter (2) oder am Dosierorgan (8) mittels Gelenkelementen angelenkt ist.

4. Verteilmaschine (1) nach zumindest Anspruch 1, **dadurch gekennzeichnet, dass** eine Schwenkachse der Abdeckklappe (9) zumindest annähernd der Rotationsachse der Vorgelegewelle des Antriebs des zumindest einen Dosierorgans (8) entspricht.

5. Verteilmaschine (1) nach zumindest Anspruch 1 oder 2, **dadurch gekennzeichnet, dass** die Abdeckung (9) in ihrer die angetriebenen Teile des zumindest einen Dosierorgans (8) freigebenden Wartungsposition (12) einen ebenen, zumindest annähernd parallel zum Erdboden verlaufenden Bereich (13) aufweist.

6. Verteilmaschine nach zumindest Anspruch 5, **dadurch gekennzeichnet, dass** der ebene, in Wartungsposition (12) zumindest annähernd parallel zum Erdboden verlaufende Bereich (13) der Abdeckung (9) als Ablagefläche nutzbar ist.

## Claims

1. Agricultural spreader machine (1) having a storage vessel (2), at least one metering member (8) which is assigned to the storage vessel (2), is driven rotationally, and feeds the material which is situated in the storage vessel (2) in adjustable quantities into delivering lines (7) which lead to dispensing members (6), it being possible for the driven, in particular rotating, parts of a drive of the metering member (8) to be covered by means of a covering (9) during operation, adjusting elements of the at least one metering member (8) being accessible in the case of a metering member (8) which is covered by means of the covering (9), **characterized in that** the covering (9) is configured in a pivotable manner as a covering flap and can be moved into an operating position (11), in which it covers the driven parts of the at least one metering member (8), and into a maintenance position (12), in which it releases the driven parts of the at least one metering member.

2. Spreader machine (1) according to Claim 1, **characterized in that** the covering (9) can be moved from its operating position (11) into its maintenance position (12) only with the deliberate utilization of a suitable tool.

3. Spreader machine (1) according to at least one of the preceding claims, **characterized in that** the pivotable covering (9) is articulated on the storage vessel (2) or on the metering member (8) by means of articulating elements in the region of the at least one metering member (8).

4. Spreader machine (1) according to at least Claim 1, **characterized in that** a pivot axis of the covering flap (9) corresponds at least approximately to the rotational axis of the countershaft of the drive of the at least one metering member (8).

5. Spreader machine (1) according to at least Claim 1 or 2, **characterized in that**, in its maintenance position (12), in which it releases the driven parts of the at least one metering member (8), the covering (9) has a planar region (13) which runs at least approximately parallel to the ground.

6. Spreader machine according to at least Claim 5, **characterized in that** that planar region (13) of the covering (9) which runs at least approximately parallel to the ground in the maintenance position (12) can be utilized as a storage surface.

## Revendications

1. Épandeur agricole (1) comprenant un réservoir (2), au moins un organe de dosage (8) entraîné en rotation et associé au réservoir (2), qui injecte le matériau se trouvant dans le réservoir (2) en quantités ajustables dans des conduites de transport (7) conduisant à des organes d'épandage (6), les parties entraînées, notamment rotatives, d'un entraînement de l'organe de dosage (8) pouvant être recouvertes pendant le fonctionnement au moyen d'un recouvrement (9), des éléments d'ajustage de l'au moins un organe de dosage (8) étant accessibles lorsque l'organe de dosage (8) est recouvert au moyen du recouvrement (9), **caractérisé en ce que** le recouvrement (9) est réalisé de manière à pouvoir pivoter en tant que volet de recouvrement et peut être amené dans une position de fonctionnement (11) recouvrant les parties entraînées de l'au moins un organe de dosage (8) et dans une position d'entretien (12) libérant les parties entraînées de l'au moins un organe de dosage.

2. Épandeur (1) selon la revendication 1, **caractérisé en ce que** le recouvrement (9) peut être amené de sa position de fonctionnement (11) dans sa position d'entretien (12) seulement en utilisant spécifiquement un outil approprié.

3. Épandeur (1) selon au moins l'une des revendications précédentes, **caractérisé en ce que** le recouvrement pivotant (9) est articulé dans la région de l'au moins un organe de dosage (8) au réservoir (2) ou à l'organe de dosage (8) au moyen d'éléments d'articulation.

4. Épandeur (1) selon au moins la revendication 1, **caractérisé en ce qu'**un axe de pivotement du volet de recouvrement (9) correspond au moins approximativement à l'axe de rotation de l'arbre intermédiaire de l'entraînement de l'au moins un organe de dosage (8).

5. Épandeur (1) selon au moins la revendication 1 ou 2, **caractérisé en ce que** le recouvrement (9) présente, dans sa position d'entretien (12) libérant les parties entraînées de l'au moins un organe de dosage (8), une région plane (13) s'étendant au moins approximativement parallèlement au sol.

6. Épandeur selon au moins la revendication 5, **caractérisé en ce que** la région plane (13) du recouvrement (9), s'étendant dans la position d'entretien (12) au moins approximativement parallèlement au sol, peut être utilisée en tant que surface de dépose.
